# EUROPÄISCHE PATENTSCHRIFT

(11) **EP 2 724 051 B1**
(45) Veröffentlichungstag und Bekanntmachung des Hinweises auf die Patenterteilung: **05.08.2015**
(21) Anmeldenummer: 12728412.3
(22) Anmeldetag: 20.06.2012
(51) Int. Cl.: F16G 3/06, B21L 99/00, F16G 13/06

(54) **ROLLENKETTE**
ROLLER CHAIN
CHAÎNE À ROULEAUX

(30) Priorität: 24.06.2011 DE 202011102600 U
(43) Veröffentlichungstag der Anmeldung: 30.04.2014
(73) Patentinhaber: Renold GmbH, 37574 Einbeck (DE)
(72) Erfinder: RAGNITZ, Detlef, 37586 Dassel (DE); CHRISTMAS, Mike, Warrington Cheshire WA1 4EY (GB)
(74) Vertreter: Pfenning, Meinig & Partner GbR
(86) Internationale Anmeldenummer: PCT/EP2012/002641
(87) Internationale Veröffentlichungsnummer: WO 2012/175216

(56) Entgegenhaltungen:
- EP-A1- 0 171 561
- GB-A- 990 782
- JP-A- 6 227 632
- US-A- 4 757 681
- US-A- 5 226 856
- US-A1- 2003 177 752

## Beschreibung

Die Erfindung betrifft eine Rollenkette mit Bolzen, einstückigen Innengliedern jeweils bestehend aus zwei buchsenförmigen, in Längsrichtung der Rollenkette im Abstand voneinander und sich in Querrichtung der Rollenkette erstreckenden Teilen und mindestens zwei laschenförmigen, die buchsenförmigen Teile miteinander verbindenden, sich in Längsrichtung der Rollenkette erstreckenden Teilen, und Außenlaschen nach dem Oberbegriff des Anspruchs 1.

Derartige, häufig für Antriebe genutzte Ketten sind dort, wo Oberflächen gleitend aufeinander gelagert sind, also insbesondere auf der Außenseite der buchsenförmigen Teile der Innenglieder und der Innenseite der auf diesen gelagerten Rollen, wenn diese jeweils aus Stahl bestehen, hohem Verschleiß ausgesetzt. Um den Verschleiß in Grenzen zu halten, ist an den genannten Stellen üblicherweise eine gute Schmierung erforderlich. Bei einem Trocken- oder Notlauf derartiger Ketten treten jedoch eine rasche Beschädigung oder Zerstörung der Kette und darüber hinaus drastische Energieverluste auf.

Um eine geringere Anfälligkeit derartiger Ketten für Beschädigungen auch bei ungenügender Schmierung zu erreichen, ist es bekannt, die Bolzen und/oder die Buchsen mit Nitriden oder DLC, einer diamantähnlichen Kohlenstoffschicht, zu beschichten. Auch diese Ketten haben jedoch den Nachteil, dass der bei einem Trockenlauf der Kette zumindest an einer von jeweils zwei aufeinander gleitenden Oberflächen auftretende Verschleiß über ein angestrebtes kleines Maß hinausgeht. Außerdem werden die Herstellungskosten erhöht.

Darüber hinaus haben Rollenketten, die vollständig aus Metall bestehen, ein erhebliches Gewicht. Diese Eigenschaft macht sich insbesondere dann als nachteilig bemerkbar, wenn die Ketten hohen Beschleunigungen und Verzögerungen ausgesetzt sind.

Um diesem Mangel abzuhelfen und auch die Notlaufeigenschaften zu verbessern, ist auch bekannt, einer Reibung ausgesetzte Teile von Rollenketten aus Kunststoff herzustellen. Jedoch unterliegen derartige Teile einem hohen Abrieb und auch die Druck- und/oder Zugfestigkeit derartiger Teile ist begrenzt.

Aus der gattungsbildenden EP 0 171 561 A1 ist eine Gelenkkette bekannt, die aus einer Reihe von Innenlaschen, Außenlaschen und Mitteln zum Verbinden der Innen- und Außenlaschen zum Schwenken um eine Reihe von Querachsen besteht. Jede Innenlasche umfasst eine integrale Struktur mit einem Paar von Seitenplatten und ein Paar von Buchsen, die sich zwischen den Platten konzentrisch mit der Querachse erstrecken. Aneinander angrenzende Außenlaschen weisen zueinander beabstandete Endkanten auf, um das Schwenken zu ermöglichen.

Aus der US 5,226,845A ist außerdem eine Rollenkette bekannt, die zumindest einige Rollen aus Nylon aufweist. Die Rollen sind auf Hülsen angeordnet und auf diesen frei drehbar.

Aus der GB 990,782 (A) ist eine Förderkette bestehend aus Innenlaschen 7 aus synthetischer Kunststoff, Außenlaschen in der Form eines Paares von MetallPlatten 5, 6 und Metall-Drehstiften, wobei benachbarte Stifte 9, 10 benachbarter Innenlaschen miteinander durch Splinte 11 verbunden sind, die ihre Drehung relativ zueinander verhindern.

Es ist daher die Aufgabe der vorliegenden Erfindung, eine Rollenkette mit Bolzen, einstückigen Innengliedern jeweils bestehend aus zwei buchsenförmigen, in Längsrichtung der Rollenkette im Abstand voneinander angeordneten und sich in Querrichtung der Rollenkette erstreckenden Teilen und mindestens zwei laschenförmigen, die buchsenförmigen Teile miteinander verbindenden, sich in Längsrichtung der Rollenkette erstreckenden Teilen, Rollen und Außenlaschen, wobei auf jedem der buchsenförmigen Teile eine diesen umfassende Rolle drehbar gelagert ist und jeweils zwei aufeinanderfolgende Innenglieder dadurch gelenkig miteinander verbunden sind, dass jeder buchsenförmige Teil konzentrisch auf einem über seine beiden Enden hinausragenden Bolzen angeordnet ist und zwei so zwei aufeinanderfolgenden Innengliedern zugeordnete, direkt aufeinanderfolgende Bolzen durch zumindest zwei Außenlaschen miteinander verbunden sind, anzugeben, die gute Notlaufeigenschaften besitzt und sich besonders für einen Betrieb mit hoher Geschwindigkeit bei häufigen Beschleunigungen und Verzögerungen eignet, ohne dass eine verkürzte Lebensdauer und/oder eine verringerte Belastbarkeit ihre Verwendbarkeit merkbar einschränken.

Diese Aufgabe wird erfindungsgemäß dadurch gelöst, dass zumindest ein Teil der Innenglieder aus einem Polymer mit einer Schmelztemperatur von über 300°C und in dieses eingelagerten langfaserigen Verstärkungsfasern besteht. Durch die hohe Schmelztemperatur wird die Abriebfestigkeit erhöht und die eingelagerten Verstärkungsfasern führen zu einer deutlich verbesserten Belastbarkeit. Es werden zwar nicht solche Festigkeitswerte wie bei einer Kette mit aus Stahl bestehenden Innenteilen erreicht, jedoch sind bei vielen Anwendungsfällen gute Notlaufeigenschaften und ein verringertes Gewicht wichtiger als extrem lange Lebensdauer und sehr hohe Belastbarkeit. Auch kann das Innenteil gegenüber einem solchen aus Stahl größere Wandstärken aufweisen, wodurch die Festigkeitseinbuße teilweise kompensiert werden kann; ohne dass die durch die Gewichtsabnahme und die verbesserte Notlaufeigenschaften erzielten Vorteile wieder aufgegeben werden müssen. Weiterhin kann die Rollenkette kostengünstig hergestellt werden, dass das Material der Innenglieder sehr preiswert ist und die Fertigung beispielsweise durch Spritzgießen besonders hohe Stückzahlen ermöglicht.

Als ein geeignetes Polymermaterial hat sich Polyetheretherketon (PEEK) erwiesen, und die Verstärkungsfasern bestehen vorteilhaft aus Kohle- oder Glasfasern. Deren Länge sollte überwiegend (statistisch 60% der Fasern) im Bereich von 2,5 mm bis 4 mm liegen, wobei ihr Anteil am Gesamtgewicht der Innenglieder zweckmäßig zwischen 55% und 70% betrage sollte. Die eingelagerten Fasern sollten vorzugsweise parallel zur Rollen- bzw. Kettenlängsrichtung verlaufen, was bei einer Herstellung im Spritzgussverfahren problemlos erreicht werden kann. Hierdurch wird insbesondere die Zugfestigkeit der laschenförmigen Teile der Innenglieder erhöht. Besonders vorteilhaft ist es, wenn die Fasern in den buchsenförmigen und den laschenförmigen Teilen der Innenglieder jeweils in zwei sich senkrecht zueinander kreuzenden Richtungen verlaufen.

Um die Antriebfestigkeit noch zu erhöhen, kann das so gefertigte Innenglied nachträglich mit einer zusätzlichen harten Außenbeschichtung, beispielsweise aus Titan, Graphit oder Diamant versehen werden. Dies hat eine Dicke zwischen 10 und 30 µm, vorzugsweise 20 µm, und wird vorteilhaft durch Dampfdeposition (DLC-PDV) aufgebracht.

Vor dem Spritzgießvorgang werden die bereits vorher hergestellten Rollen, die aus dem gleichen Material wie die zu spritzenden Innenglieder oder auch aus Stahl bestehen können, in die Spritzgussform eingelegt und dann auf der Innenseite und Stirnseiten mit dem Material der Innenglieder umspritzt. Beim Erstarren schrumpft das eingespritzte Material, so dass es sich von den Rollen löst und jeweils ein kleiner Spalt zwischen den Rollen und dem sich bildenden Innenglied entsteht. Auf diese Weise ergibt sich die drehbare Lagerung der Rollen und die Einstellung der Toleranz für den Spalt kann auf sehr einfache Weise realisiert werden.

Die Innenglieder können auch auf der Innenseite der Teile jeweils mit einer aus gehärtetem Kohlenstoffstahl oder rostfreiem Stahl bestehenden Buchse versehen werden, indem eine derartige Buchse ebenfalls vor dem Spritzgießvorgang in die Spritzgussform eingelegt und dann auf der Außenseite und den Stirnseiten umspritzt wird.

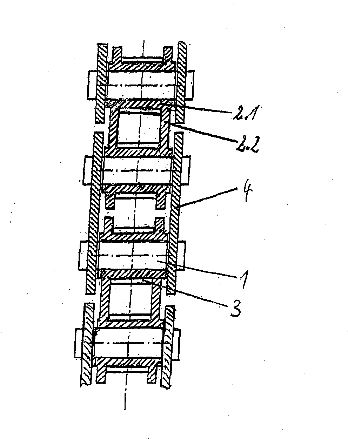

Die Erfindung wird im Folgenden anhand eines in der Figur dargestellten Ausführungsbeispiels näher erläutert. Diese zeigt einen Abschnitt einer Rollenkette im Längsschnitt.

Die in der Figur abgebildete Rollenkette besteht aus Bolzen 1, Innengliedern mit jeweils zwei buchsenförmigen Teilen 2.1 und laschenförmigen Teilen 2.2, Rollen 3 und Außenlaschen 4. Die beiden buchsenförmigen Teile 2.1 eines Innengliedes sind durch die beiden laschenförmigen Teile 2.2 fest miteinander verbunden und bilden mit diesen das einstückige Innenglied, wobei auf jedem buchsenförmigen Teil 2.1 eine diesen umfassende Rolle 3 drehbar gelagert ist. Jeweils zwei aufeinanderfolgende Innenglieder sind dadurch gelenkig miteinander verbunden, dass jeder buchsenförmige Teil 2.1 auf einem über seine beiden Enden hinausragenden Bolzen 1 sitzt und zwei unmittelbar benachbarte, von jeweils einem buchsenförmigen Teil 2.1 umfasste Bolzen 1 von zwei aufeinander folgenden Innengliedern durch zwei Außenlaschen 4 miteinander verbunden sind, wobei jeweils ein Ende der beiden Bolzen 1 in einer Bohrung an jeweils einem Ende einer Außenlasche 4 gelagert ist.

Erfindungsgemäß besteht zumindest ein Teil der Innenglieder aus einem Polymer mit einer Schmelztemperatur von über 300°C und in dieses eingelagerten langfaserigen Verstärkungsfasern, wodurch eine Rollenkette mit relativ geringem Gewicht und guten Notlaufeigenschaften sowie dem jeweiligen Anwendungsfall angepasster Lebensdauer und Belastbarkeit erhalten werden kann.

Die Erfindung betrifft außerdem die folgenden Aspekte
1. Rollenkette mit Bolzen (1), einstückigen Innengliedern jeweils bestehend aus zwei buchsenförmigen, in Längsrichtung der Rollenkette im Abstand voneinander und sich in Querrichtung der Rollenkette erstreckenden Teilen (2.1) und mindestens zwei laschenförmigen, die buchsenförmigen Teile (2.1) miteinander verbindenden, sich in Längsrichtung der Rollenkette erstreckenden Teilen (2.2), Rollen (3) und Außenlaschen (4), wobei auf jedem der buchsenförmigen Teile (2.1) eine diesen umfassende Rolle (3) drehbar gelagert ist und jeweils zwei aufeinanderfolgende Innenglieder dadurch gelenkig miteinander verbunden sind, dass jeder buchsenförmige Teil (2.1) konzentrisch auf einem über seine beiden Enden hinausragenden Bolzen (1) angeordnet ist und zwei so zwei aufeinanderfolgenden Innengliedern zugeordnete, direkt aufeinanderfolgende Bolzen (1) durch zumindest zwei Außenlaschen (4) miteinander verbunden sind,
   wobei zumindest ein Teil der Innenglieder aus einem Polymer mit einer Schmelztemperatur von über 300°C und in dieses eingelagerten langfaserigen Verstärkungsfasern besteht.
2. Rollenkette gemäß dem ersten Aspekt, wobei die Innenglieder aus Polyetheretherketon in einem Spritzgussverfahren hergestellt sind.
3. Rollenkette gemäß dem zweiten Aspekt, wobei die Innenglieder durch Umspritzen vorgefertigter Rollen (3) hergestellt sind.
4. Rollenkette gemäß einem der vorangehend genannten Aspekte, wobei die Verstärkungsfasern im Innenglied parallel zur Kettenlängsrichtung verlaufen.
5. Rollenkette gemäß einem der Aspekte erstens bis drittens, wobei die Verstärkungsfasern im Innenglied in zwei sich senkrecht zueinander kreuzenden Richtungen verlaufen.
6. Rollenkette gemäß einem der vorangehend genannten Aspekte, wobei die Verstärkungsfasern aus Kohlefasern oder Glasfasern bestehen.
7. Rollenkette gemäß einem der vorangehend genannten Aspekte, wobei die Rollen (3) aus Stahl bestehen.
8. Rollenkette gemäß einem der Aspekte erstens bis sechstens, wobei die Rollen (3) ebenfalls aus einem Polymer mit einer Schmelztemperatur von über 300°C und in dieses eingelagerten Verstärkungsfasern bestehen.
9. Rollenkette gemäß einem der vorangehend genannten Aspekte, wobei der Faseranteil im Innenglied zwischen 65% und 70% beträgt.
10. Rollenkette gemäß einem der vorangehend genannten Aspekte, wobei statistisch 60% der Verstärkungsfasern in den Innengliedern eine Länge in einem Bereich von 2,5 mm bis 4 mm aufweisen.
11. Rollenkette gemäß einem der vorangehend genannten Aspekte, wobei die Bolzen (1) und die Außenlaschen (4) aus einem gehärteten Kohlenstoffstahl oder rostfreiem Stahl bestehen.
12. Rollenkette gemäß einem der vorangehend genannten Aspekte, wobei das Innenglied mit einer harten Außenbeschichtung versehen ist.
13. Rollenkette gemäß dem zwölften Aspekt, wobei die Außenbeschichtung aus Titan, Graphit oder Diamant besteht und eine Dicke von 10 bis 30 µm hat.
14. Rollenkette gemäß einem der vorangehend genannten Aspekte, wobei die buchsenförmigen Teile (2.1) der Innenglieder jeweils auf der Innenseite eine umspritzte Buchse aus gehärtetem Kohlenstoffstahl oder rostfreiem Stahl aufweisen.

## Patentansprüche

1. Rollenkette mit Bolzen (1), einstückigen Innengliedern jeweils bestehend aus zwei buchsenförmigen, in Längsrichtung der Rollenkette im Abstand voneinander und sich in Querrichtung der Rollenkette erstreckenden Teilen (2.1) und mindestens zwei laschenförmigen, die buchsenförmigen Teile (2.1) miteinander verbindenden, sich in Längsrichtung der Rollenkette erstreckenden Teilen (2.2), und Außenlaschen (4), wobei jeweils zwei aufeinanderfolgende Innenglieder dadurch gelenkig miteinander verbunden sind, dass jeder buchsenförmige Teil (2.1) konzentrisch auf einem über seine beiden Enden hinausragenden Bolzen (1) angeordnet ist und zwei so zwei aufeinanderfolgenden Innengliedern zugeordnete, direkt aufeinanderfolgende Bolzen (1) durch zumindest zwei Außenlaschen (4) miteinander verbunden sind, **dadurch gekennzeichnet, dass** die Rollenkette Rollen (3) aufweist, wobei auf jedem der buchsenförmigen Teile (2.1) eine diesen umfassende Rolle (3) drehbar gelagert ist und dass die Innenglieder durch Umspritzen vorgefertigter Rollen (3) hergestellt sind, dass zumindest ein Teil der Innenglieder aus einem Polymer mit einer Schmelztemperatur von über 300°C und in dieses eingelagerten langfaserigen Verstärkungsfasern besteht und dass die Innenglieder aus Polyetheretherketon in einem Spritzgussverfahren hergestellt sind.

2. Rollenkette nach Anspruch 1, **dadurch gekennzeichnet, dass** die buchsenförmigen Teile (2.1) der Innenglieder jeweils auf der Innenseite eine umspritzte Buchse aus gehärtetem Kohlenstoffstahl oder rostfreiem Stahl aufweisen.

3. Rollenkette nach einem der Ansprüche 1 bis 2, **dadurch gekennzeichnet, dass** die Verstärkungsfasern im Innenglied parallel zur Kettenlängsrichtung verlaufen.

4. Rollenkette nach einem der Ansprüche 1 bis 2 **dadurch gekennzeichnet, dass** die Verstärkungsfasern im Innenglied in zwei sich senkrecht zueinander kreuzenden Richtungen verlaufen.

5. Rollenkette nach einem der Ansprüche 1 bis 4, **dadurch gekennzeichnet, dass** die Verstärkungsfasern aus Kohlefasern oder Glasfasern bestehen.

6. Rollenkette nach einem der Ansprüche 1 bis 5, **dadurch gekennzeichnet, dass** die Rollen (3) aus Stahl bestehen.

7. Rollenkette nach einem der Ansprüche 1 bis 6, **dadurch gekennzeichnet, dass** die Rollen (3) ebenfalls aus einem Polymer mit einer Schmelztemperatur von über 300°C und in dieses eingelagerten Verstärkungsfasern bestehen.

8. Rollenkette nach einem der Ansprüche 1 bis 7, **dadurch gekennzeichnet, dass** der Faseranteil im Innenglied zwischen 65% und 70% beträgt.

9. Rollenkette nach einem der Ansprüche 1 bis 8, **dadurch gekennzeichnet, dass** statistisch 60% der Verstärkungsfasern in den Innengliedern eine Länge in einem Bereich von 2,5 mm bis 4 mm aufweisen.

10. Rollenkette nach einem der Ansprüche 1 bis 9, **dadurch gekennzeichnet, dass** die Bolzen (1) und die Außenlaschen (4) aus einem gehärteten Kohlenstoffstahl oder rostfreiem Stahl bestehen.

11. Rollenkette nach einem der Ansprüche 1 bis 10, **dadurch gekennzeichnet, dass** das Innenglied mit einer harten Außenbeschichtung versehen ist.

12. Rollenkette nach Anspruch 11, **dadurch gekennzeichnet, dass** die Außenbeschichtung aus Titan, Graphit oder Diamant besteht und eine Dicke von 10 bis 30 µm hat.

## Claims

1. A roller chain with pins (1), one-piece inner members each consisting of two bush-shaped parts (2.1), which are at a distance from one another in the longitudinal direction of the roller chain and which extend in the transverse direction of the roller chain, and at least two plate-shaped parts (2.2), which connect the bush-shaped parts (2.1) to one another and which extend in the longitudinal direction of the roller chain, and external plates (4), wherein in each case two successive inner members are connected to one another in an articulated manner in that each bush-shaped part (2.1) is arranged concentrically on a pin (1) projecting beyond its two ends and two directly successive pins (1), thus two pins (1) associated with successive inner members, are connected to one another by at least two external plates (4), **characterized in that** the roller chain has rollers (3), wherein on each of the bush-shaped parts (2.1) there is rotatably mounted a roller (3) embracing the latter and **in that** the inner members are manufactured by the encapsulation of prefabricated rollers (3), **in that** at least some of the inner members are made of a polymer with a melting point above 300°C and long-fibre reinforcing fibres imbedded therein, and **in that** the inner members are manufactured from polyether ether ketone using injection moulding.

2. A roller chain according to claim 1, **characterized in that** the bush-shaped parts (2.1) of the inner members each have, on the inner side, an over moulded bush of hardened carbon steel or stainless steel.

3. A roller chain according to any one of claims 1 to 2, **characterized in that** the reinforcing fibres in the inner member run parallel to the chain longitudinal direction.

4. A roller chain according to any one of claims 1 to 2, **characterized in that** the reinforcing fibres in the inner member run in two directions intersecting perpendicular to one another.

5. A roller chain according to any one of claims 1 to 4, **characterized in that** the reinforcing fibres consist of carbon fibres or glass fibres.

6. A roller chain according to any one of claims 1 to 5, **characterized in that** the rollers (3) are composed of steel.

7. A roller chain according to any one of claims 1 to 6, **characterized in that** the rollers (3) are likewise composed of a polymer with a melting point above 300°C and reinforcing fibres imbedded therein.

8. A roller chain according to any one of claims 1 to 7, **characterized in that** the fibre proportion in the inner member is between 65% and 70%.

9. A roller chain according to any one of claims 1 to 8, **characterized in that** statistically 60% of the reinforcing fibres in the inner members have a length in a range from 2.5 mm to 4 mm.

10. A roller chain according to any one of claims 1 to 9, **characterized in that** the pins (1) and the outer plates (4) are composed of a hardened carbon steel or of stainless steel.

11. A roller chain according to any one of claims 1 to 10, **characterized in that** the inner member is provided with a hard outer coating.

12. A roller chain according to claim 11, **characterized in that** the outer coating is composed of titanium, graphite or diamond and has a thickness from 10 to 30 µm.

## Revendications

1. Chaîne à rouleaux avec tiges (1), des maillons internes monobloc constitués de deux parties en forme de manchons (2.1), à une distance les unes des autres dans la direction longitudinale de la chaîne à rouleaux et s'étendant dans la direction transversale de la chaîne à rouleaux et d'au moins deux parties en forme de pattes (2.2), reliant entre elles les parties en forme de manchons (2.1) et s'étendant dans la direction longitudinale de la chaîne à rouleaux et des pattes externes (4), deux maillons internes successifs étant ainsi reliés entre eux de manière articulée, grâce au fait que chaque partie en forme de manchon (2.1) est disposé de manière concentrique sur une tige (1) dépassant de ses deux extrémités et deux tiges (1) se suivant directement, correspondant à des maillons successifs, étant reliés entre eux à l'aide d'au moins deux pattes externes (4), **caractérisée en ce que** la chaîne à rouleaux comprend des rouleaux (3), sur chacune des parties en forme de manchons (2.1), un rouleau (3) entourant celle-ci étant logé de manière rotative et **en ce que** les maillons internes sont fabriqués par le surmoulage de rouleaux préfabriqués (3), **en ce qu'**au moins une partie des maillons internes sont constitués d'un polymère avec une température de fusion de plus de 300°C et de longues fibres de renforcement intégrées dans celui-ci, et ce que les maillons internes sont constitués de polyéther-éther-cétone par injection.

2. Chaîne à rouleaux selon la revendication 1, **caractérisée en ce que** les parties en forme de manchons (2.1) des maillons internes présentent, à l'intérieur, un manchon surmoulé en acier au carbone durci ou en acier inoxydable.

3. Chaîne à rouleaux selon l'une des revendications 1 à 2, **caractérisée en ce que** les fibres de renforcement dans le maillon interne sont parallèles à la direction longitudinale de la chaîne.

4. Chaîne à rouleaux selon l'une des revendications 1 à 2, **caractérisée en ce que** les fibres de renforcement dans le maillon interne s'étendent dans deux directions perpendiculaires entre elles.

5. Chaîne à rouleaux selon l'une des revendications 1 à 4, **caractérisée en ce que** les fibres de renforcement sont des fibres de carbone ou des fibres de verre.

6. Chaîne à rouleaux selon l'une des revendications 1 à 5, **caractérisée en ce que** les rouleaux (3) sont constitués d'acier.

7. Chaîne à rouleaux selon l'une des revendications 1 à 6, **caractérisée en ce que** les rouleaux (3) sont également constitués d'un polymère avec une température de fusion supérieure à 300°C et de fibres de renforcement intégrées dans celui-ci.

8. Chaîne à rouleaux selon l'une des revendications 1 à 7, **caractérisée en ce que** la proportion de fibres dans le maillon interne est entre 65% et 70%.

9. Chaîne à rouleaux selon l'une des revendications 1 à 8, **caractérisée en ce que**, statistiquement, 60% des fibres de renforcement dans les maillons internes présentent une longueur de l'ordre de 2,5 mm à 4 mm.

10. Chaîne à rouleaux selon l'une des revendications 1 à 9, **caractérisée en ce que** les tiges (1) et les pattes externes (4) sont constituées d'un acier au carbone durci ou d'un acier inoxydable.

11. Chaîne à rouleaux selon l'une des revendications 1 à 10, **caractérisée en ce que** le maillon interne est muni d'un revêtement externe dur.

12. Chaîne à rouleaux selon la revendication 11, **caractérisée en ce que** le revêtement externe est constitué de titane, de graphite ou de diamant et présente un épaisseur de 10 à 30 µm.
